# EUROPEAN PATENT APPLICATION

(11) **EP 0 786 910 A2**
(43) Date of publication of application: **30.07.1997**
(21) Application number: 97101456.8
(22) Date of filing: 30.01.1997
(51) Int. Cl.: H04N 9/31

(54) **Liquid crystal projector**

(30) Priority: 02.02.1996 JP 17376/96
(71) Applicant: NEC CORPORATION, Tokyo (JP)
(72) Inventor: Tashiro, Yoshiharu, Minato-ku, Tokyo (JP); Sakamoto, Mikio, Minato-ku, Tokyo (JP)
(74) Representative: VOSSIUS & PARTNER

(57) **Abstract**

A liquid crystal projector which is light-weight and low cost and is capable of reducing degradation of projected image quality is provided. A component in the color synthesizing optical system of the liquid crystal projector which is the most important in view of image quality degradation caused by aberration and warp of reflection plane is a color synthesizing component located nearest to the projection lens for synthesizing three primary colors. Therefore, a dichroic prism which is heavy is used as the color synthesizing component to reduce the degradation of image quality and the other color synthesizing component is constituted with dichroic mirrors and a reflection mirror, which are light-weight and low cost, resulting in a light-weight and low cost liquid crystal projector. Further, a color light component which is subjected to less characteristic between reflection and transmission characteristics of the light-weight and low cost components, which are in a trade-off relation, is a blue color light component the visibility of human eyes of which is the lowest among others, so that human eyes are relatively insensitive to the degradation of projected image quality.

## Description

The present invention relates to a 3-plate type liquid crystal projector which separates light from a light source to three primary colors, forms images of respective primary colors by three liquid crystal light valves provided for the respective primary colors, synthesizes the three primary color images and enlarges and projects the synthesized image having three primary colors by a projection lens.

### Prior Art Description:

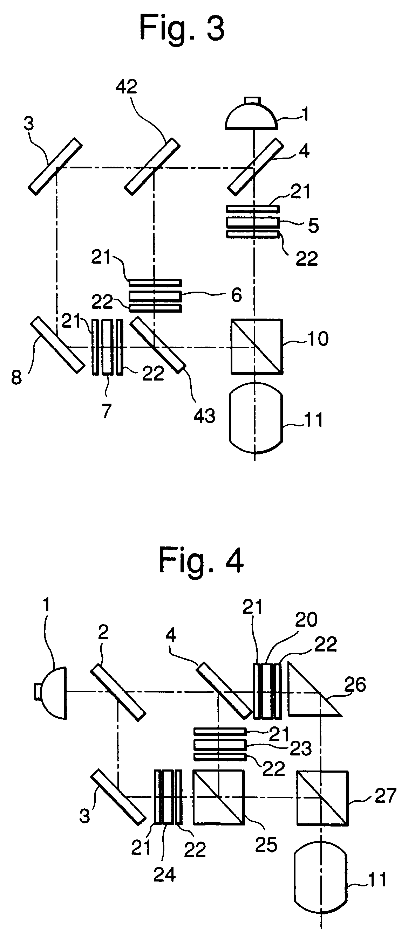

An example of conventional liquid crystal projector is disclosed in Japanese Patent Application Laid-open No. H4(1992)-141648. The disclosed liquid crystal projector will be described with reference to Fig. 4.

In Fig. 4, the disclosed liquid crystal projector comprises a light source 1, dichroic mirrors 2 and 4 of a color separating optical system for separating light emitted from the light source 1 to three primary colors and liquid crystal light valves 20, 23 and 24 for optically modulating the respective primary color images and forming an image having three primary colors. The liquid crystal light valves 20, 23 and 24 are usually of twisted nematic liquid crystal and each liquid crystal light valve is disposed between a polarizer 21 and an analyzer 22. The liquid crystal projector further comprises a reflection prism 26 for reflecting the color light optically modulated by the liquid crystal light valve 20, a dichromic prism 27 for passing the color light therethrough, a dichromic prism 25 for reflecting the color light optically modulated by the liquid crystal light valve 23. The color light reflected by the dichroic prism 25 is further reflected by the dichroic prism 27. The color light optically modulated by the liquid crystal light valve 24 passes through the dichroic prism 25 and is reflected by the dichroic prism 27. Each of the dichroic prisms 25 and 27 is constructed by optically bonding hypotenuse planes of two right triangular prisms which are coated with dielectric multi-layered films having desired frequency vs. reflectivity and transmittivity characteristics. The reflection prism 26 is composed of a single right triangular prism having a hypotenuse plane coated with a dielectric multi-layered film having a desired reflectivity characteristics.

In general, in a liquid crystal projector, an insertion of a substance having different refractive index from that of a focusing optical system into the focusing optical system results in aberration which causes a projected image to be degraded. The larger the thickness of the inserted substance provides the larger the aberration. When dichroic mirrors are used in a color synthesizing optical system which is usually used in a 3-plate type liquid crystal projector, a difference in reflectivity and transmittivity between glass plates of the dichroic mirrors substantially influences a resultant image quality. Further, the lens effect of warp of the dichroic mirror is also a source of image quality degradation.

In the example shown in Fig. 4, however, it is possible to reduce the degradation of projected image since the same substance having the same thickness is inserted into every color light path and aberration can be reduced by designing the optical system by preliminarily incorporating the prisms in a projector lens 11. Further, with the use of the prisms, warp of the reflection planes thereof can be reduced to a substantially negligible extent.

In the case of the above mentioned prior art, there are a weight problem and a cost problem of the projector due to the use of prisms although the aberration problem and the warp problem of the dichroic mirror, etc., can be improved. The weight and cost problems become considerable with increase of the size of a liquid crystal panel to be used.

An object of the present invention is to provide a liquid crystal projector which is light-weight and low cost.

Another object of the present invention is to provide a liquid crystal projector which can minimize degradation of projected image quality.

A liquid crystal projector according to the present invention comprises a white light source, a condensing optical system for condensing light from the light source, a color separating optical system for separating light condensed by the condensing optical system to three primary colors, liquid crystal light valves provided for the respective primary colors for optically modulating the respective primary colors, a color synthesizing optical system including at least a first color synthesizing component for synthesizing two of the modulated three primary color lights and a second color synthesizing component for synthesizing the synthesized two modulated primary color lights and the remaining modulated primary color light and a projection lens for projecting the synthesized color light from the color synthesizing optical system, wherein the first color synthesizing component comprises a dichroic mirror, the second color synthesizing component comprises a dichroic prism and either a transmitted light through or reflected light by the dichroic mirror is blue color light.

A component in the color synthesizing optical system which is the most important in view of image quality degradation caused by aberration and warp of reflection plane is the second color synthesizing component located nearest to the projection lens for synthesizing three primary colors. Therefore, the dichroic prism which is heavy is used as the second color synthesizing component to reduce the degradation of image quality and the other color synthesizing component is constituted with dichroic mirrors and reflection mirrors which are light-weight and low cost, resulting in a light-weight and low cost liquid crystal projector.

Although the use of various mirrors, particularly, the dichroic mirror for the first color synthesizing component for synthesizing two color lights, causes an image quality to be degraded to some extent, it is possible to make such degradation of image quality negligible by selecting blue light which provides the lowest visibility for human eyes as either one of the two colors which is degraded largely compared with the other while being transmitted through or reflected by the dichroic mirror.

### BRIEF DESCRIPTION OF THE DRAWINGS

Fig. 1 shows a construction of a liquid crystal projector according to a first embodiment of the present invention;
Fig. 2 shows a construction of a liquid crystal projector according to a second embodiment of the present invention;
Fig. 3 shows a construction of a liquid crystal projector according to a third embodiment of the present invention; and
Fig. 4 shows a construction of a prior art liquid crystal projector.

### DETAILED DESCRIPTION OF THE PREFERRED EMBODIMENTS

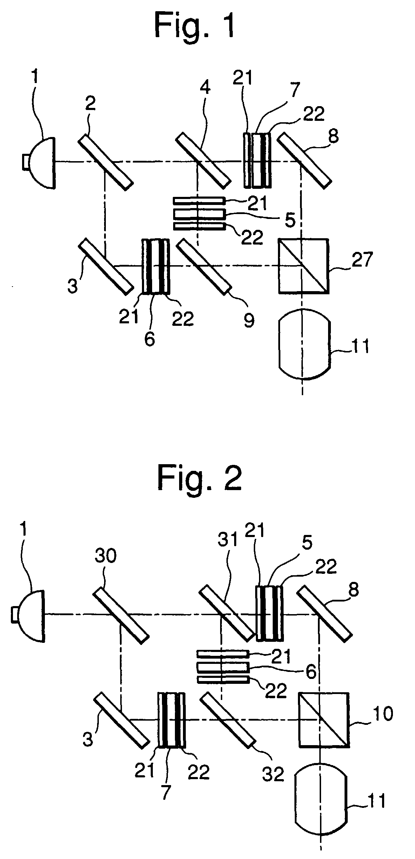

A first embodiment of the present invention will be described in detail with reference to Fig. 1. In Fig. 1, a light source 1 is a white light source. Dichroic mirrors 2 and 4 separate light from the light source 1 to three primary color lights, red, green and blue lights. A reflection mirror 3 reflects one of the three primary colors, which is in this case red light, and liquid crystal light valves 5, 6 and 7 for respective blue, red and green lights, each having a polarizer 21 and an analyzer 22, modulate the respective color lights to form images. A reflection mirror 8 reflects light modulated by the liquid crystal light valve 7. A dichroic mirror 9 synthesizes color lights modulated by the liquid crystal light valves 5 and 6 and a dichroic prism 27 synthesizes the three color lights to obtain a three color image. A projection lens 11 enlarges and projects the synthesized three color image onto a projection panel which is not shown.

An operation of the liquid crystal projector shown in Fig. 1 will be described. In Fig. 1, red color component having wavelength of about 600 nm ∼ about 700 nm of light from the light source 1 which comprises a metal halide lamp is reflected by the dichroic mirror 2 which transmits other color components than red. The red light reflected by the dichroic mirror 2 is changed in direction to the red liquid crystal light valve 6 by the reflection mirror 3. Green color component having wavelength of about 500 nm ∼ about 600 nm of the light components passed through the dichroic mirror 2 is reflected by the dichroic mirror 4 which allows the remaining blue color component having wavelength of about 400 nm ∼ about 500 nm to pass through. The green color component reflected by the dichroic mirror 4 is directed to the green liquid crystal light valve 5 and the blue color component passed through the dichroic mirror 4 is directed to the blue liquid crystal light valve 7. The polarizer 21 and the analyzer 22 of each liquid crystal light valve forms an image of a given color by modulating the corresponding color light.

The blue light modulated by the blue liquid crystal light valve 7 is reflected by the reflection mirror 8 to the dichroic prism 27 which allows blue color to pass through and the blue light from the dichroic prism 27 is enlarged and projected by the projection lens 11. The green light modulated by the green liquid crystal light valve 5 is directed to the dichroic mirror 9 which allows red color to pass through and the green light reflected by the dichroic mirror 9 is enlarged and projected by the projection lens 11. The red light modulated by the red liquid crystal light valve 6 is directed to the dichroic mirror 9 and, after passed therethrough, enlarged and projected by the projection lens 11. Therefore, in this embodiment of the present invention, the red light and the green light are synthesized by the dichroic mirror 9 and the synthesized red and green lights are synthesized with the blue light by the dichroic prism 27.

As mentioned previously, an insertion of a substance having a different refractive index from that of a focusing optical system into the focusing optical system results in aberration which causes a projected image to be degraded and the larger the thickness of the inserted substance provides the larger the aberration. When dichroic mirrors are used in a color synthesizing optical system, the existence of glass plates of the dichroic mirrors and the flatness of the glass plates influence an image quality. However, a component in the color synthesizing optical system which is the most important in view of image quality degradation caused by aberration and warp of reflection plane is the color synthesizing component located nearest to the projection lens for synthesizing three primary colors. Therefore, the dichroic prism is used as such color synthesizing component to substantially reduce the influence of the glass plates and the flatness thereof which is the problem when the dichroic mirrors are used and the other color synthesizing component is constituted with the dichroic mirror 9 and the reflection mirror 8 which do not constitute any cause of the degradation of image quality. Such construction realizes a light-weight and low cost liquid crystal projector compared with the prior art projector in which a plurality of prisms. The light source 1 is not limited to the metal halide lamp. Other high-luminance lamp such as halogen lamp, xenon lamp, high pressure mercury lamp, etc., may be used equally.

Next, a second embodiment of the present invention will be described in detail with reference to Fig. 2. Referring to Fig. 2, a light source 1 is a white light source. A dichroic mirror 30 which reflects a blue light and a dichroic mirror 31 which reflects a red light function to separate light from the light source 1 to three light components having primary red, green and blue colors, respectively. A reflection mirror 3 reflects the blue light separated by the dichroic mirror 30 and a blue liquid crystal light valve 7, a red liquid crystal light valve 6 and a green liquid crystal light valve 5, each having a polarizer 21 and an analyzer 22, modulate the respective color lights to form respective color images. A reflection mirror 8 reflects the modulated green color light and a dichroic mirror 32 allows a blue light to pass through and synthesizes the red and blue lights modulated by the respective red and blue liquid crystal light valves 6 and 7. A dichroic prism 10 has a green transmission characteristics and synthesizes three primary color lights. With this construction, only the blue light modulated by the blue liquid crystal light valve 7 passes through the dichroic mirror 32, the red color light is reflected thereby and by the dichroic prism 10 and the green color light passes through the dichroic prism 10, resulting in the synthesized image having three primary colors.

In the first embodiment shown in Fig. 1, the three-color synthesizing component in the color synthesizing optical system which is the most important in view of image quality degradation caused by aberration and warp of reflection plane comprises the dichroic prism and the two-color synthesizing component comprises the dichroic mirrors. Further, the positional relation between the respective liquid crystal light valves is not defined specifically. However, some degradation of image quality is unavoidable because of the use of the two-color synthesizing dichroic mirrors. The degradation of image quality is caused by the flatness of the reflection planes of the dichroic mirrors in the case of reflection and by the thickness of the mirror plates in the case of transmission. The flatness and the thickness of the plate are in a trade-off relation and the thicker the plate provides the higher the flatness and the larger the aberration in the case of transmission. when color synthesizing dichroic mirrors. Therefore, if only one of the flatness and the thickness, that is, for example, the flatness in the case where the dichroic mirror is used as a reflection mirror, were important, it may be enough to consider the flatness. The flatness of the reflection plane of the dichroic mirror may be maintain as high as an extent which does not cause any serious problem on the image quality by making the thickness of the glass plate which is the substrate of the dichroic mirror large. However, the dichroic mirrors used as the two-color synthesizing components function to both reflect and transmit lights and, if either one of the flatness and the thickness is to be maintained as high, some degradation of image quality in the other sense is unavoidable. In order to avoid such problem, blue light which proves the lowest visibility of human eyes is assigned to either one of the two color lights which is degraded by reflection at or transmission through the dichroic mirror. Thus, it is possible to lower the visible degradation on the display panel. For example, in the embodiment shown in Fig. 2, when the flatness of the reflection plane of the dichroic mirror 32 is improved to the extent that there is no substantial problem on the image quality by making the dichroic mirror 32 thicker, there is some problem of the aberration for transmission. In such case, the dichroic mirror 32 is designed to transmit blue light and reflect the other red light. By synthesizing the blue color light passed through the dichroic mirror 32, the red color light reflected thereby and the green color light reflected by the reflection mirror 8, the degradation of image quality can be further reduced compared with the embodiment shown in Fig. 1. On the other hand, when the thickness of the glass substrate of the dichroic mirror is reduced to the extent that the influence of transmission becomes negligible, the flatness may cause degradation of image quality. In such case, the dichroic mirror may be designed to reflect blue light with a similar effect as that obtained in the former case. For example, when the pixel size is in the order of several tens microns, the lowest levels of the flatness and the thickness which do not cause the degradation of image quality are several tens in the number of Newton rings and several fractions of a millimeter, respectively. Incidentally, when the red and green liquid crystal light valves are exchanged in their positions each other, the similar effect can be obtained by setting dichroic mirrors and a dichroic prism having reflective and transmissive characteristics corresponding to these liquid crystal light valves.

Now, a third embodiment of the present invention will be described in detail with reference to Fig. 3. Referring to Fig. 3, a light source 1 is a white light source. A dichroic mirror 41 transmits a green light of a light from the light source 1 and reflects a blue and red color lights of the light from the light source 1 to a dichroic mirror 42 which transmits the blue color light to a reflection mirror 3 and reflects the red color light. A reflection mirror 8 reflects the blue color light from the reflection mirror 3 to a blue liquid crystal light valve 7. The blue liquid crystal light valve 7, a red liquid crystal light valve 6 and a green liquid crystal light valve 5, each having a polarizer 21 and an analyzer 22, modulate the respective color lights to form respective color images. A dichroic mirror 43 has a blue light transmission characteristics for synthesizing the red color light from the red liquid crystal light valve 6 and the blue color light from the blue liquid crystal light valve 7. A dichroic prism 10 has a green transmission characteristics and synthesizes three primary color lights. A projection lens 11 enlarges and projects the synthesized primary color lights.

With this construction, only the blue light modulated by the green liquid crystal light valve 7 passes through the dichroic mirror 43 and synthesized by the dichroic prism 10 with the red color light from the red liquid crystal light valve 6 and reflected by the dichroic mirror 43 and the green color light from the green liquid crystal light valve 5, resulting in the synthesized image having three primary colors. According to this embodiment, it is possible to lower the visible degradation on the display panel and to reduce the weight and cost of the liquid crystal projector compared with the second embodiment shown in Fig. 2. Incidentally, when the red and green liquid crystal light valves are exchanged in their positions each other, the similar effect can be obtained by setting dichroic mirrors and a dichroic prism having reflective and transmissive characteristics corresponding to these liquid crystal light valves.

A first effect of the present invention is that the second embodiment of the liquid crystal projector of the present invention which is shown in Fig. 2 can be constructed with one dichroic prism, one dichroic mirror and one reflection mirror while two dichroic prisms and one reflection prism are required by the prior art projector. In general, the weight of a liquid crystal projector is substantially varied by the size of each of the liquid crystal light valves used therein. A 1.3 type liquid crystal panel is used in the present liquid crystal projector, the reflection mirror is 10 grams or less while the dichroic prism is about 400 grams and the reflection prism is about 200 grams. Therefore, the weight of the present liquid crystal projector can be one twentieth of the weight of the prior art projector. Although, when the size of the liquid crystal panel increases, the weight of the prism increases by third power of the increase of the panel size, the weight of the mirror increases by second power thereof. Therefore, the reduction effect of weight of the present invention becomes substantial.

A second effect of the present invention is the reduction effect of cost of the liquid crystal projector. When the 1.3 type liquid crystal panel is used, the cost of the dichroic mirror is about one third of that of the dichroic prism and the cost of the reflection mirror is one tenth of the reflection prism. Therefore, the cost of the liquid crystal projector can be substantially reduced. When the size of the liquid crystal panel increases, the cost of the prism increases by third power of the increase of the panel size and the cost of the mirror increases by second power thereof, as in the case of weight. Therefore, the reduction effect of cost of the present invention becomes substantial.

A third effect of the present invention is that, in order to reduce the aberration caused by transmission of light when the flatness is improved by increasing the thickness of the dichroic mirror in the case of the second embodiment shown in Fig. 2, the blue color light is made transmissive through the dichroic mirror so that the visibility of degradation of image quality caused by the dichroic mirror is lowered compared with that of the green and red color lights. The ratio of visibility of human eyes for green, red and blue is generally considered as green : red : blue = 6 : 3 : 1. Therefore, if the green and red color lights are made transmission lights for the dichroic mirror, visibility of the green and red color lights become about 6 times and about 3 times of the visibility of the blue color light, respectively.

## Claims

1. A liquid crystal projector comprising:
a white light source;
a condensing optical system for condensing light from said light source;
a color separating optical system for separating the light condensed by said condensing optical system to three primary color light components;
liquid crystal light valves provided correspondingly to the respective three primary color light components for modulating the respective three primary color light components;
a color synthesizing optical system including at least a first color synthesizing component for synthesizing two of the modulated three primary color light components and a second color synthesizing component for synthesizing the synthesized two modulated primary color light components and the remaining modulated primary color light component; and
a projection lens for projecting the synthesized color light from said color synthesizing optical system,
said first color synthesizing component comprising a dichroic mirror, and said second color synthesizing component comprising a dichroic prism.

2. A liquid crystal projector as claimed in claim 1, wherein said dichroic mirror synthesizes more insensitive color light components for human eyes.

3. A liquid crystal projector as cleimed in claim 2, wherein said dichroic mirror synthesizes blue and red color light components.

4. A liquid crystal projector as claimed in claim 1, wherein said dichroic mirror for synthesizing two of the modulated three primary color light components transmits or reflect the blue color light component.

5. A liquid crystal projector as claimed in claim 1, wherein said dichroic mirror for synthesizing two of the modulated three primary color light components transmits an insensitive color light component for human eyes.

6. A liquid crystal projector comprising:
a light source;
a first dichroic mirror for reflecting a red color light component of a light from said light source and transmitting other color light components;
a red liquid crystal light valve for receiving the red color light component reflected by said first dichroic mirror;
a second dichroic mirror for transmitting a blue color light component of the other color light components from said first dichroic mirror and reflecting a green color light component of the other color light components from said first dichroic mirror;
a green liquid crystal light valve for receiving the green color light component reflected by said second dichroic mirror;
a blue liquid crystal light valve for receiving the blue color light component reflected by said second dichroic mirror;
a third dichroic mirror for synthesizing the red color light component passed through said red liquid crystal light valve and the green color light component passed through said green color light component; and
a dichroic prism for synthesizing the blue color light component passed through said blue liquid crystal light valve and the light components synthesized by said third dichroic mirror, the resultant light synthesized by said dichroic prism being projected.

7. A liquid crystal projector comprising:
a light source;
a first dichroic mirror for reflecting a blue color light component of a light from said light source and transmitting other color light components;
a blue liquid crystal light valve for receiving the blue color light component reflected by said first dichroic mirror;
a second dichroic mirror for transmitting a green color light component of the other color light components from said first dichroic mirror and reflecting a red color light component of the other color light components from said first dichroic mirror;
a red liquid crystal light valve for receiving the red color light component reflected by said second dichroic mirror;
a green liquid crystal light valve for receiving the green color light component passed through said second dichroic mirror;
a third dichroic mirror for synthesizing the blue color light component passed through said blue liquid crystal light valve and the red color light component passed through said red color light component; and
a dichroic prism for synthesizing the green color light component passed through said green liquid crystal light valve and the light components synthesized by said third dichroic mirror, the resultant light synthesized by said dichroic prism being projected.

8. A liquid crystal projector comprising:
a light source;
a first dichroic mirror for transmitting a green color light component of a light from said light source and reflecting other color light components;
a green liquid crystal light valve for receiving the green color light component transmitted through said first dichroic mirror;
a second dichroic mirror for transmitting a blue color light component of the other color light components reflected by said first dichroic mirror and reflecting a red color light component of the other color light components from said first dichroic mirror;
a blue liquid crystal light valve for receiving the blue color light component transmitted through said second dichroic mirror;
a red liquid crystal light valve for receiving the red color light component passed through said second dichroic mirror;
a third dichroic mirror for synthesizing the blue color light component passed through said blue liquid crystal light valve and the red color light component passed through said red color light component; and
a dichroic prism for synthesizing the green color light component passed through said green liquid crystal light valve and the light components synthesized by said third dichroic mirror, the resultant light synthesized by said dichroic prism being projected.
